# EUROPÄISCHE PATENTSCHRIFT

(11) **EP 1 644 152 B1**
(45) Veröffentlichungstag und Bekanntmachung des Hinweises auf die Patenterteilung: **26.01.2011**
(21) Anmeldenummer: 04766069.1
(22) Anmeldetag: 24.06.2004
(51) Int. Cl.: B23F 19/00

(54) **VERFAHREN ZUM HINTERLEGEN DER ZÄHNE VERZAHNTER WERKSTÜCKE**
METHOD FOR PRODUCING UNDERCUTS ON TOOTHED WORKPIECES
PROCEDE POUR GENERER DES CONTRE-DEPOUILLES SUR LES DENTS DE PIECES DENTEES

(30) Priorität: 01.07.2003 DE 10329413
(43) Veröffentlichungstag der Anmeldung: 12.04.2006
(73) Patentinhaber: Profilator GmbH & Co. KG, 42329 Wuppertal (DE)
(72) Erfinder: STRAUCH, Martin, D-42349 Wuppertal (DE); HEINEMANN, Wolfgang, D-42855 Remscheid (DE); HEYM, Hans Udo, D-42327 Wuppertal (DE)
(74) Vertreter: Grundmann, Dirk
(86) Internationale Anmeldenummer: PCT/EP2004/051218
(87) Internationale Veröffentlichungsnummer: WO 2005/002770

(56) Entgegenhaltungen:
- EP-A- 0 625 399
- EP-A- 0 720 885
- WO-A-02/45895

## Beschreibung

Die Erfindung betrifft ein Verfahren zum Profilieren von verzahnten Werkstücken gemäß Gattungsbegriff des Anspruchs 1.

Ein derartiges Verfahren beschreibt die WO 02/45895 A1. Dort wird mittels eines verzahnten Werkzeuges ein verzahntes Werkstück bearbeitet. In die Zahnflanken der Zähne des Werkstückes werden Hinterlegungen eingefräst. Dabei werden zunächst die Hinterlegungen der einen, beispielsweise linken Zahnflanken aller Zähne eingearbeitet. Nach Umkehr der Drehrichtung von sowohl Werkstück als auch Werkzeug werden die jeweils anderen Zahnflanken, beispielsweise die rechten Zahnflanken von einer anderen Schneidkante bearbeitet.

Das gattungsgemäße Verfahren ist ferner aus der EP 0 625 399 bekannt. Dort sollen die Hinterlegungen von einem Schlagmesser in die Zahnflanken eingearbeitet werden. Wie auch bei der WO 02/45895 läuft die Schneidkante auf einer offenen Hypozykloidenbahn.

Die EP 0 720 885 beschreibt ein Werkzeug zum Erzeugen von Hinterlegungen, bei dem die Schneidkante entlang einer Hypozykloiden oder Epizykloiden läuft.

Die EP 0 550 877 B1 beschreibt ebenfalls ein Verfahren zum Erzeugen von Hinterlegungen, bei dem die Schneidkante relativ zum Werkstück auf einer offenen Zykloidenbahn verläuft. Die Bearbeitung erfolgt hier stoßend, wobei die Zykloide derart gewählt ist, dass der jeweils in die zu bearbeitende Verzahnung eintauchende Zykloidenast sich wenigstens angenähert mit dem Eingriffswinkel der zu bearbeitenden Verzahnung deckt. Die Flugbahn der Schneidkante soll bei diesem Vorschlag der Profilform der Hinterlegung angenähert werden. Die Schnittzustellung soll durch relatives Verdrehen von Werkzeug und Werkstück vorgenommen werden. Durch den dann vom Zahnkopf zum Zahnfuß durchgehenden Schnitt entstehen lange Späne. Um den nötigen Austauchraum für die Schneidkante aus dem abzutragenden Material bereitzustellen, müssen die Zahnlücken hinterschnittene Protuberanzen aufweisen. Wegen der bei diesem Verfahren nicht zu vermeidenden Gratbildung und der langen Späne ist eine Trockenbearbeitung nicht möglich. Die für dieses Verfahren erforderliche Vorgabe des Zykloidenverlaufs hat den Nachteil, dass die Schneidwerkzeuge eine sehr filigrane Gestalt besitzt und somit nur eine geringe Zeit standhalten.

Der Erfindung liegt die Aufgabe zugrunde, ein gattungsgemäßes Verfahren derart weiterzubilden, dass bei gleichbleibender oder sogar höherer Schneidleistung die Standzeit des Schneidwerkzeuges erhöht wird.

Gelöst wird die Aufgabe durch die in Anspruch 1 angegebene Erfindung.

Die abhängigen Ansprüche betreffer Weiterbildungen der Erfindung.

Der Anspruch 1 sieht zunächst und im Wesentlichen vor, dass die durch den Achsabstand, den Flugkreis der Schneidkante und das Übersetzungsverhältnis definierte zykloidische Bewegungsbahn der Schneidkante gegenüber dem Werkstück so gewählt ist, dass der zulaufende Ast einer Zykloidenschleife den rücklaufenden Ast derselben Zykloidenschleife schneidet. Anders als beim Stand der Technik erfolgt die Bearbeitung mit einer geschlossenen bzw. verschlungenen Zykloide. Die Bewegungsbahn der Schneidkante im Bereich ihres Schnittes kann in erheblichem Maße von der Profilform der Hinterlegung abweichen. Der Vorschub wird so gesteuert, dass das herzustellende Profil mit mehreren Hüllschnitten nachgefahren wird. Diese Hüllschnitten verlaufen auf einer Hüllkurve. Bei diesem Verfahren ergeben sich bei einer entsprechenden Abweichung der Schnittlinie von der Profilform kurze Späne, die in Verbindung mit der hohen Schnittgeschwindigkeit und der günstigen Zerspangeometrie an der Schneide eine Trockenbearbeitung erst ermöglichen. Es ist ferner von Vorteil, wenn der Vorschub der Schnittrichtung entgegengerichtet ist. Die Schneidkante läuft dann aus einer bereits geschnittenen Schnittfläche aus. Zufolge dieser Parameterwahl ist es in einfacher Weise möglich, sicherzustellen, dass der Umkehrpunkt der Zykloidenbahn erst nach Austritt aus dem zu zerspanenden Material erreicht wird. So erlaubt diese Verfahrensweise ferner, dass der Spanwinkel während des gesamten Verlaufes des Schnittes positiv ist. Es ist allerdings auch zulässig, wenn der im Verlaufe des Schnittes abnehmende Spanwinkel nur unmittelbar vor der Beendigung des Schnittes einen kleinen negativen Wert annimmt. Dies ist dann unschädlich, wenn die Schneidkante nahezu tangential aus der bereits geschnittenen Fläche austaucht. Das Werkzeug zur Bearbeitung der Zahnflanken weist bevorzugt zwei Wendeplatten auf. Jede der beiden Wendeplatten besitzt eine Schneidkante, die entweder in der einen Drehrichtung des Werkzeuges oder in der anderen Drehrichtung des Werkzeuges schneidet. Mit der einen Schneidkante werden die linken Zahnflanken und mit der anderen Schneidkante die rechten Zahnflanken (DIN 3960) geschnitten. Eine gedachte, durch die beiden Schneidkanten gehende Verbindungslinie verläuft derart versetzt zur Werkzeugachse, dass bei einer Zahnflankenbearbeitung mit der einen Wendeschneidplatte die Schneidkante der jeweils anderen frei durch die Zahnlücke taucht. Im Detail ist das achssymmetrische Werkzeug so gestaltet, dass, bezogen auf eine quer zur Symmetrieachse verlaufende Diametrale, die Schneidkanten winkelversetzt dazu liegen. Auch bei dem erfindungsgemäßen Verfahren ist vorgesehen, dass in einer ersten Drehrichtung erst die eine Zahnflanke aller Zähne und nach Umkehr der Drehrichtung mit der anderen Spankante die andere Zahnflanke aller Zähne bearbeitet wird. Das Übersetzungsverhältnis ist dabei so gewählt, dass sich die Bearbeitung der Zahnflanke eines Zahnes erst dann wiederholt, wenn die (jeweils linken oder jeweils rechten) Zahnflanken aller anderen Zähne bearbeitet worden sind. In einer Alternative ist vorgesehen, dass das Werkzeug zur Bearbeitung einer Zahnflanke mehrere Schneidkanten besitzt. Das Werkzeug kann grundsätzlich so ausgestaltet sein, wie es die WO 02/45895 beschreibt.

Gemäß einer Variante der Erfindung ist vorgesehen, dass bei innenverzahnten Werkrädern zumindest ein Schnitt auf der Profilform entsprechenden Kurve erfolgt. Es handelt sich dabei bevorzugt um einen letzten Schlichtschnitt. Dies wird durch eine Variation der Zykloidenform beispielsweise durch Variation des Achsabstandes und/oder durch Variation der Phasenlage erreicht. Die Variation erfolgt dabei innerhalb von Millisekunden, nämlich im Verlauf eines jeden Schnittes. Die Schneide verläuft dabei im zulaufenden Ast auf der zu erzeugenden Profilform, bei der es sich um eine Evolvente handeln kann. Diese aktive echtzeitmäßige Manipulation findet unter den vorgenannten Rahmenbedingungen einer geschlossenen Zykloide statt. Die entsprechende Regelung kann elektronisch oder mechanisch erfolgen. Mit Hilfe dieser schnellen, hochdynamischen Regelung ist es auch möglich, die Phasenlage bzw. den Achsabstand so zu variieren, dass die nicht bearbeitende Schneide weiterhin frei durch die Zahnlücken hindurchtauchen kann.

Ausführungsbeispiele der Erfindung werden nachfolgend anhand beigefügter Zeichnungen erläutert. Es zeigen:
- Fig. 1: die Draufsicht auf den Tragkopf eines Werkzeuges mit jeweils in einer Tasche einliegenden zwei Wendeschneidplatten,
- Fig. 2: das Werkzeug gemäß Fig. 1 in einer Seitenansicht,
- Fig. 3: das in den Fig. 1 und 2 dargestellte Werkzeug beim Bearbeiten einer linken Zahnflanke eines innenverzahnten Werkstückes,
- Fig. 3a: eine vergrößerte Darstellung eines Ausschnittes gemäß Fig. 3,
- Fig. 4: eine Darstellung gemäß Fig. 3 bei der Bearbeitung einer rechten Zahnflanke des innenverzahnten Werkstückes,
- Fig. 4a: eine Ausschnittsvergrößerung eines Bereichs der Fig. 4,
- Fig. 5: ein Schnitt gemäß der Linie V in Fig. 4,
- Fig. 6: eine vergrößerte Darstellung der Schneidkante 2 beim Eintritt und beim Austritt aus der zu bearbeitenden Zahnflanke,
- Fig. 7: die Flugkreisbahn der geschlossenen Zykloide im Bereich einer Schleife,

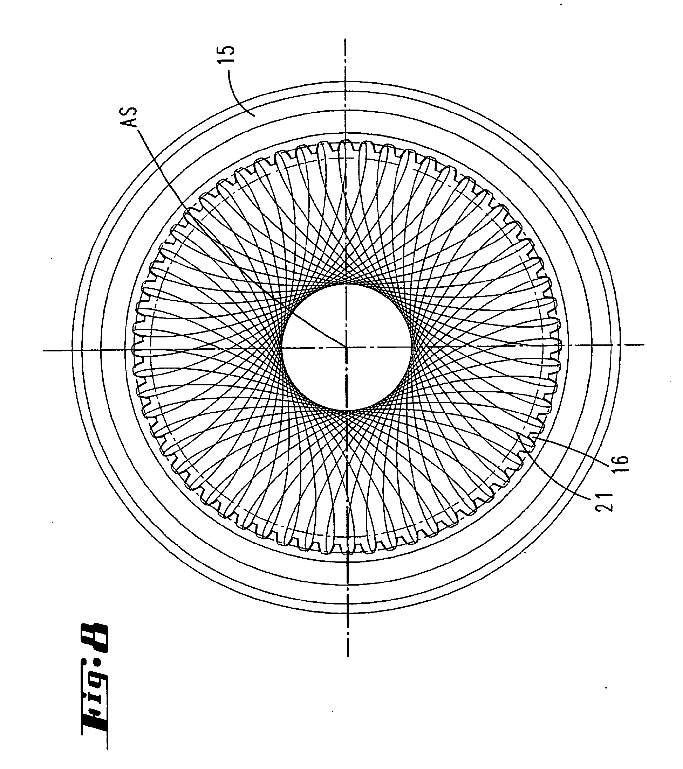

- Fig. 8: die Flugkreisbahn 21 der geschlossenen Zykloide bei einem in- nenverzahnten Werkstück,
- Fig. 9: eine Darstellung gemäß Fig. 8 bei einem außenverzahnten Werk- stück,
- Fig. 10: eine schematische Darstellung eines Verfahrens, bei dem der Vor- schub von der Zahnspitze zum Zahngrund erfolgt,
- Fig. 11: eine Darstellung gemäß Fig. 10, wobei der Vorschub vom Zahn grund zur Zahnspitze erfolgt,
- Fig.12: eine Darstellung gemäß Fig. 5 eines alternativen Verfahrens.

Das Werkzeug besteht aus einem Tragkopf 1, welcher auf seiner Stirnseite zwei Taschen 6, 7 aufweist. Die Tasche 6 besitzt zwei Taschenwände 8, 9. Die Tasche 7 ist betreffend einer durch den Mittelpunkt M gehenden Symmetrieachse 13 spiegelsymmetrisch zur Tasche 6 angeordnet und besitzt ebenfalls Taschenwände 10, 11.

In der Tasche 6 liegt eine im Wesentlichen dreieckige Wendeschneidplatte 2 ein, die mittels einer Befestigungshaube 12 am Tragkopf 1 befestigt ist Eine Schneidkante 3 ragt über die äußere Peripherie des Tragkopfes 1 hinaus. Mit der Schneidkante 3 können linke Zahnflanken im Sinne der DIN 3960 bearbeitet werden. Mit der in der Tasche 7 einliegenden, ebenfalls dreieckigen, jedoch spiegelverkehrt dazu angeordneten Wendeschneidplatte 4 können rechte Zahnflanken bearbeitet werden. Hierzu ragt eine Schneidkante 5 über die äußere Peripherie des Tragkopfes 1. Der Flugkreis F der beiden Schneidkanten 3, 5 ist derselbe.

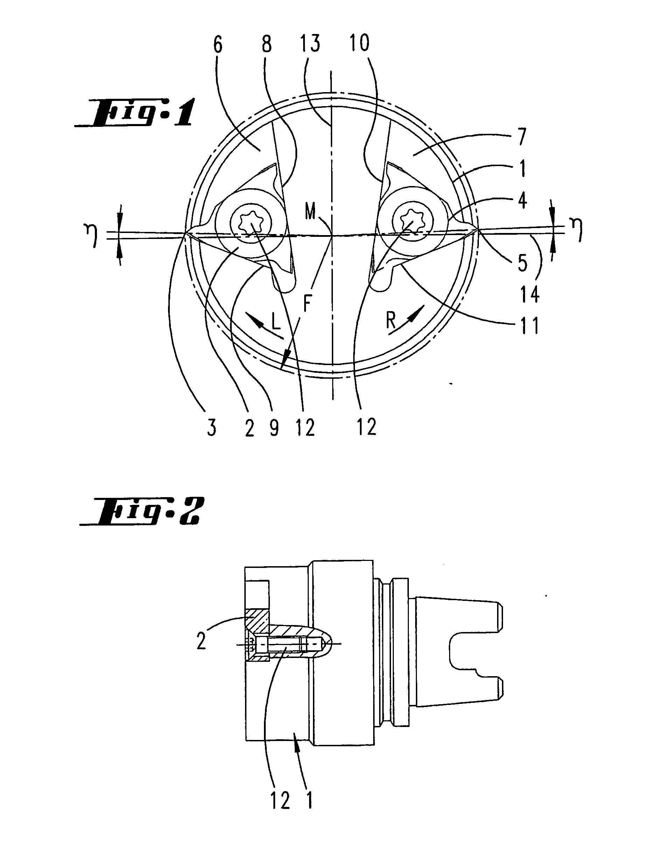

Wie aus der Fig. 1 zu entnehmen ist, sind die beiden Schneidkanten 3, 5 jeweils um einen Winkel η winkelversetzt zu einer durch den Mittelpunkt M gehenden, die Symmetrieachse 13 rechtwinklig schneidenden Diametralen 14. Dies bedeutet, dass eine gedachte, durch die beiden Schneidkanten 3,5 gezogene Verbindungslinie um einen Abstand vom Mittelpunkt M bzw. von der Diametralen 14 beabstandet ist. Die gedachte Verbindungslinie V verläuft parallel zur Diametralen 14. Die Drehrichtung des Werkzeuges zur Bearbeitung der jeweils linken oder jeweils rechten Zahnflanken ist mit Pfeilen angegeben.

Die Achse AS des Werkstückes 15 liegt von der Achse AZ des Werkzeuges um einen Abstand A versetzt. Die Verbindungslinie zwischen den beiden Achsen ASund AZ ist um einen Winkel ϕ zur Y-Achse geneigt

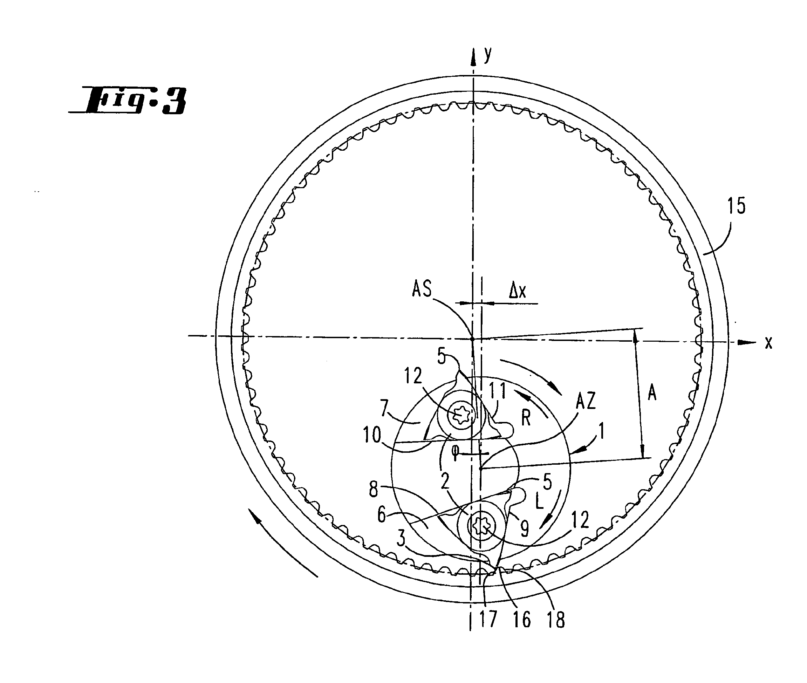

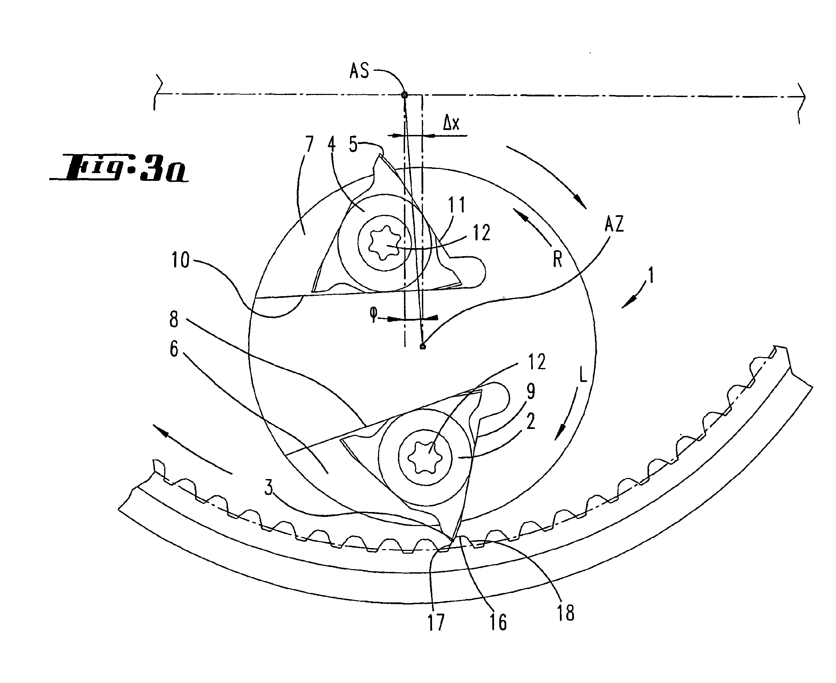

Aus der Fig. 3 geht hervor, dass die Achse AS des in Pfeilrichtung drehangetriebenen Werkstücks 15 versetzt liegt zur Achse AZ des gleichsinnig drehangetriebenen Werkzeuges, dessen Schneidkante 3 die linke Zahnflanken 17 jedes Zahnes 16 schneidet.

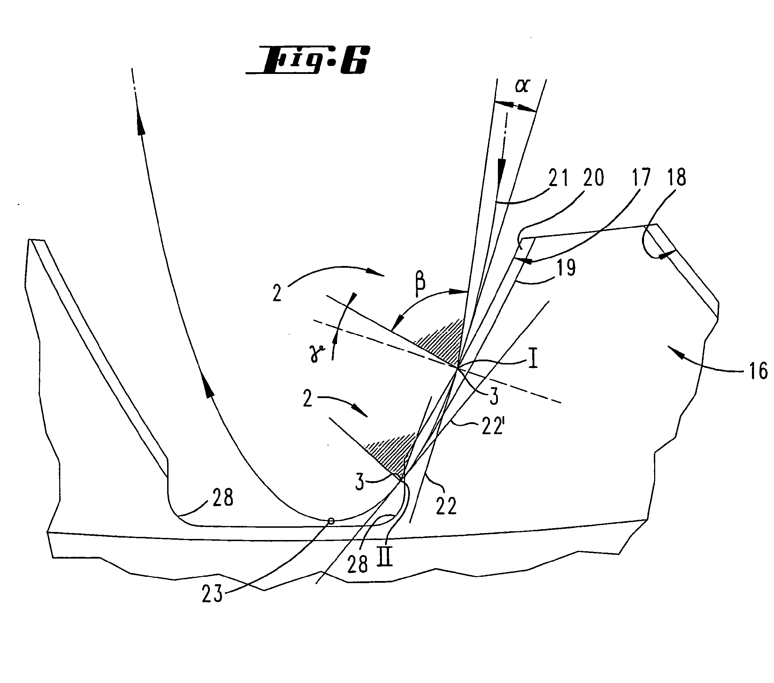

Das Übersetzungsverhältnis von Werkstück und Werkzeug ist so gewählt, dass die Schneidkante 3 eine linke Zahnflanke 17 eines bestimmten Zahnes 16 erst dann wieder schneidet, wenn zuvor die linken Zahnflanken 17 aller übrigen Zähne 16 bearbeitet wurden. Der Vorschub erfolgt durch Variation des Achsabstandes A und gleichzeitiger Variation der Phasenlage von Drehung des Werkstückes 15 und des Trägerkopfes 1. Alternativ dazu ist es auch möglich, den Achsabstand A der Achsen AZ und AS und gleichzeitig die Neigungslage ϕ der die beiden Achsen miteinander verbindenden gedachten Linie A zu varüeren. Dies entspricht einer Verlagerung der Werkzeugachse AZ in der Drehebene X/ Y Ebene der beiden parallel zu einander verlaufenden Achsen AZ und AS. Auf diese Weise erfolgen die Schnitte mit der Schneidkante 3 entlang einer Hüllkurve, die in der Fig. 6 mit der Bezugsziffer 19 bezeichnet ist, und die der Profilform der Hinterlegung entspricht.

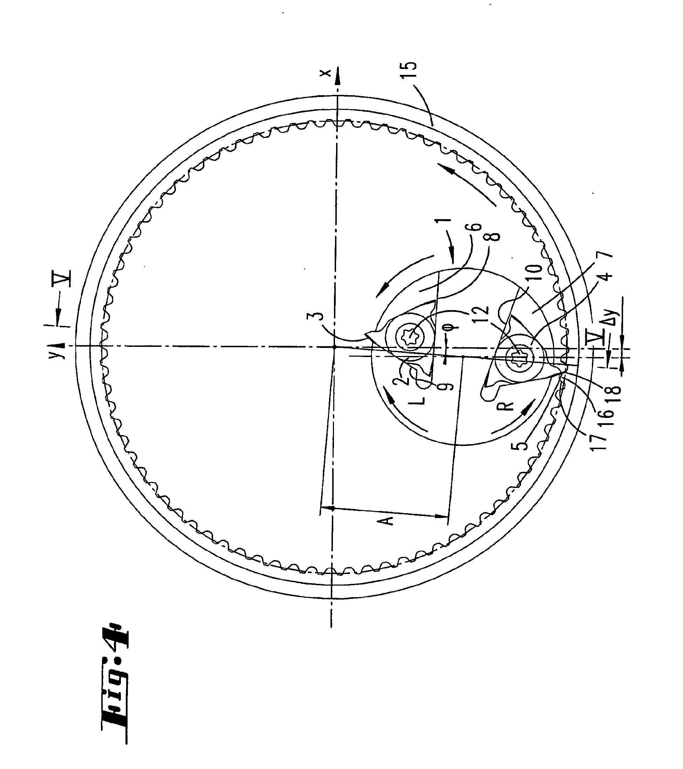

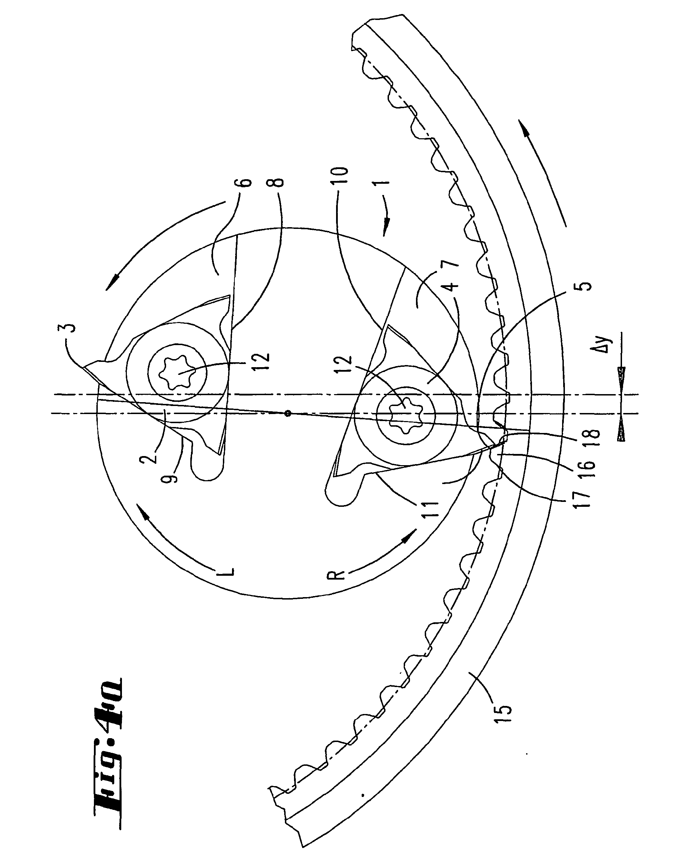

Die Fig. 3 und 3a stellen die Bearbeitung einer linken Zahnflanke dar. Durch Umkehrung der Drehrichtung sowohl des Werkzeuges 1 als auch des Werkstückes 15 und Änderung der Phasenlage der beiden Drehbewegungen bzw. des Neigungswinkels ϕ oder des Seitenversatzes Δx können die rechten Zahnflanken 18 aller Zähne 16 wie in den Fig. 4 und 4a dargestellt bearbeitet werden.

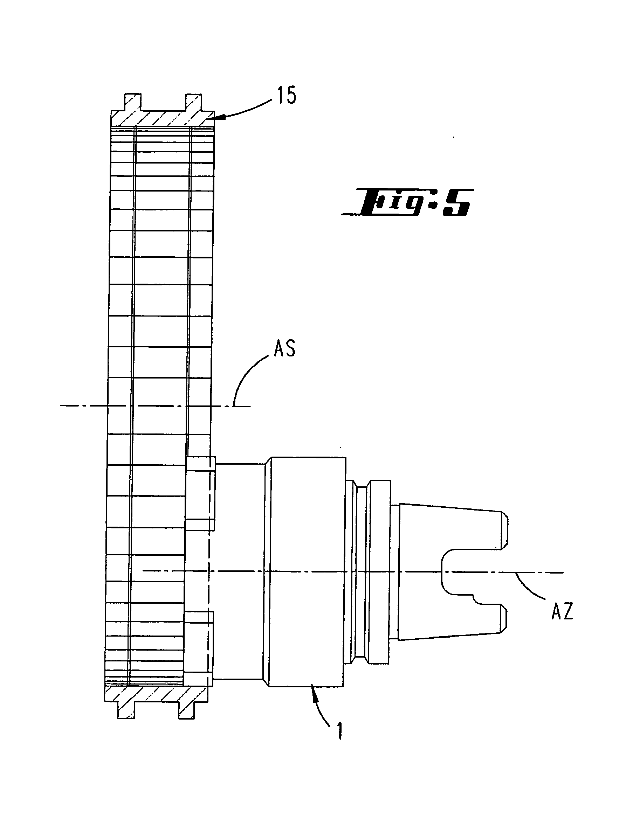

Die Fig. 5 zeigt den achsparallelen Eingriff des Werkzeuges zur Werkstückachse.

In der Fig. 6 ist mit der Bezugsziffer I der Eintauchpunkt einer Schneidkante 3 in eine linke Zahnflanke 17 dargestellt, um einen Schnitt zu vollziehen, mit dem ein Teilbereich des abzutragenden Materials 20 entfernt werden soll. Mit der Bezugsziffer 22 ist eine durch den Punkt 1 gehende Tangentiale zur Flugbahn 21 bezeichnet Mit α ist der Freiwinkel und mit γ der Spanwinkel bezeichnet β bezeichnet den Keilwinkel. Im Ausführungsbeispiel beträgt der Keilwinkel β etwa 70°. Im Eintauchpunkt I ist der Spanwinkel γ positiv. Während des Schnitts, bei der Verlagerung entlang der Flugbahn 21 von Punkt I zu Punkt II verändern sich Freiwinkel α und Spanwinkel γ. Der Spannwinkel γ wird kleiner und erreicht im Austrittspunkt II, durch welche die Tangente 22' verläuft, einen Wert 0. Der Umkehrpunkt 23 des Zykloidenastes 21 liegt dabei außerhalb des Schnittweges. Wegen der konkaven Form des Zykloidenastes 21 braucht das Werkstück keine hinterschnittenen Protuberanzen zu besitzen. Geradeverlaufende Protuberanzen 28 sind völlig ausreichend.

Die Bearbeitung der rechten Zahnflanke 18 (siehe Fig. 4 und 4a) erfolgt in spiegelsymmetrischer Weise mit in umgekehrter Drehrichtung angetriebenem Werkzeug und Werkstück.

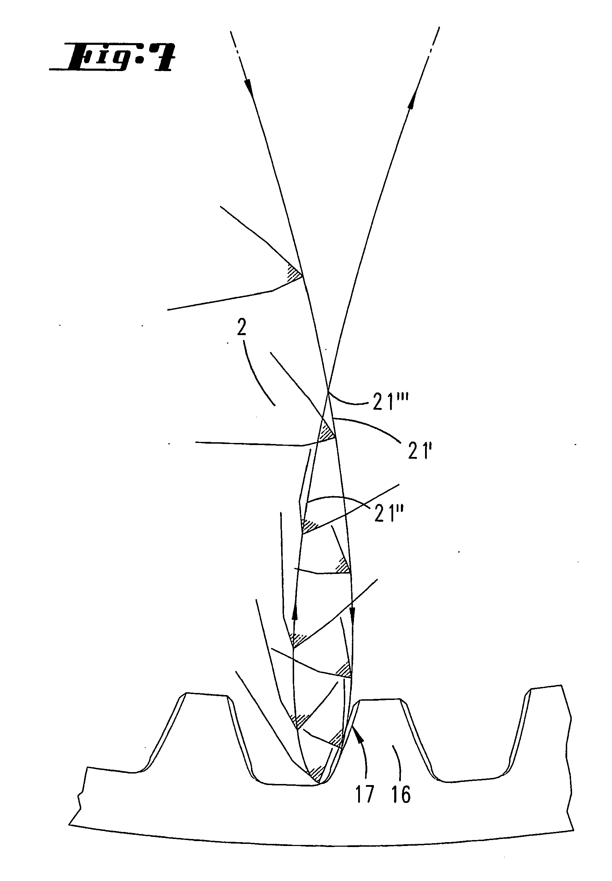

Voraussetzung für das stark gekrümmte Austauchen der Schneidkante 3 auf dem letzten Abschnitt der Flugbahn 21 vor dem Umkehrpunkt 23 und der stark konvex gekrümmte Verlauf der Flugbahn 21 ist die Wahl der Zykloidenparameter derart, dass die Zykloide geschlossen ist. Die Zykloide ist derart geschlossen bzw. verschlungen, dass der in Fig. 7 mit 21' dargestellte zulaufende Zykloidenast am Schnittpunkt 21"' den rücklaufenden Zykloidenast 21" schneidet. Der Schnittpunkt 21"' liegt dabei bei innenverzahnten Werkstücken vorzugsweise zwischen dem Zentrum des Werkstückes und dem zu bearbeitenden Zahn 16.

Aus den in der Fig. 7 dargestellten Lagen der Schneidkante 3 während der verschiedenen Bewegungsphasen beim Durchlaufen der Zykloidenschleife ist zu erkennen, dass der Freiwinkel α zum Zykloidenast 21' zunächst abnimmt, bis die Schneidkante 3 in die ihr zugeordnete Zahnflanke 17 eintaucht. Dann vergrößert sich der Freiwinkel wieder geringfügig.

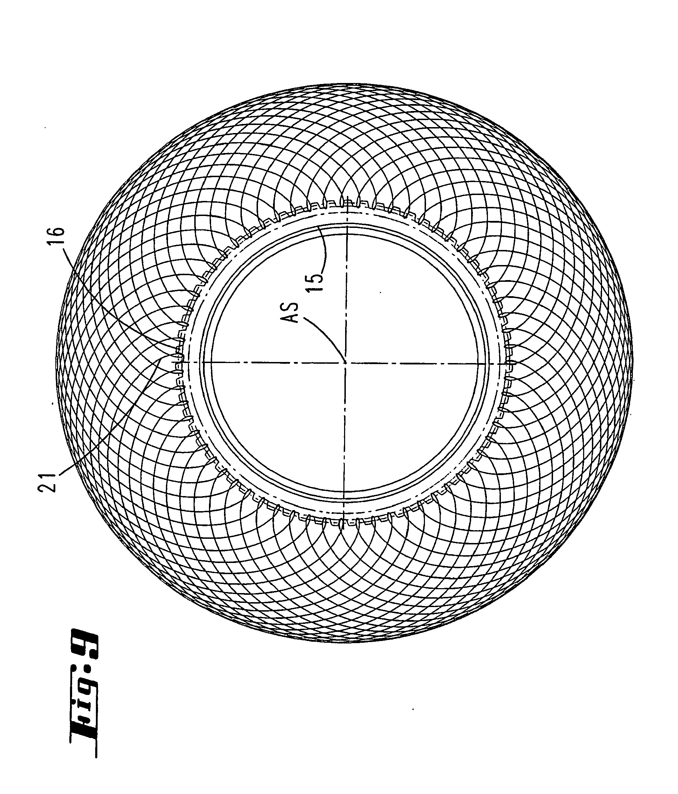

Das Verfahren kann - wie in der Fig. 9 dargestellt - auch an außenverzahnten Werkstücken 15 angewandt werden. Dann ist die Drehrichtung von Werkstück 15 und Werkzeug 1 entgegengerichtet.

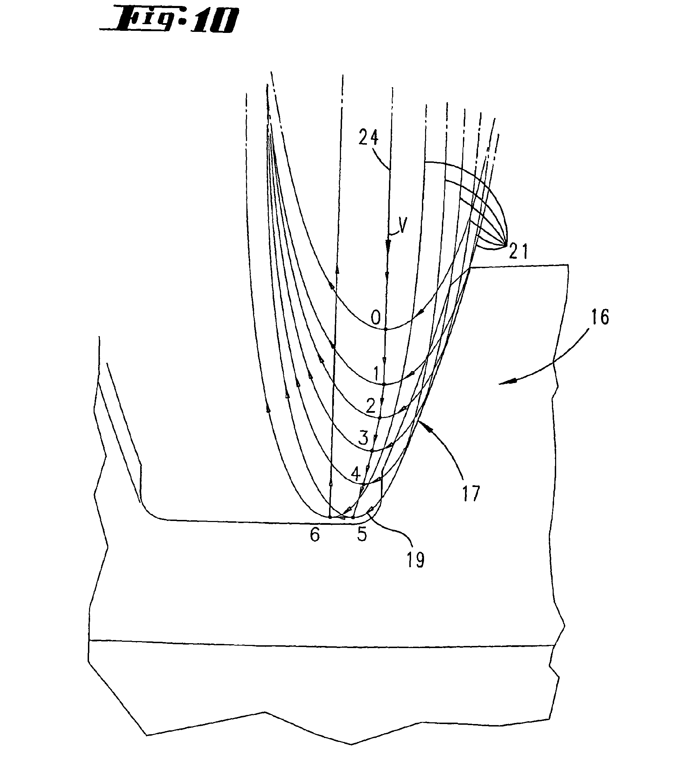

Bei allen Ausführungsbeispielen verläuft die Schnittrichtung vom Zahnkopf zum Zahngrund. Bei dem in Fig. 10 dargestellten Ausführungsbeispiel erfolgt der Vorschub V im Wesentlichen in Schnittrichtung. Zunächst erfolgt eine Zustellung bis zu dem mit 0 dargestellten Punkt. Der Vorschub erfolgt dann schrittweise oder kontinuierlich über die Punkte 1, 2, 3 bis zum Punkt 5 derartig, dass die Hüllkurve der Zykloidenäste 21 im Wesentlichen der Profilform entspricht Nach Erreichen des Punktes 5 taucht der Zykloidenast 21 in Drehrichtung zum Punkt 6 hin aus. Dabei ist die Strecke zwischen den Punkten 5 und 6 so bemessen, dass die frei durch die Zahnlücke schwenkende Schneidkante 5 der anderen Wendeplatte 4 in keine Kollision zu einer der Zahnflanken 17, 18 tritt.

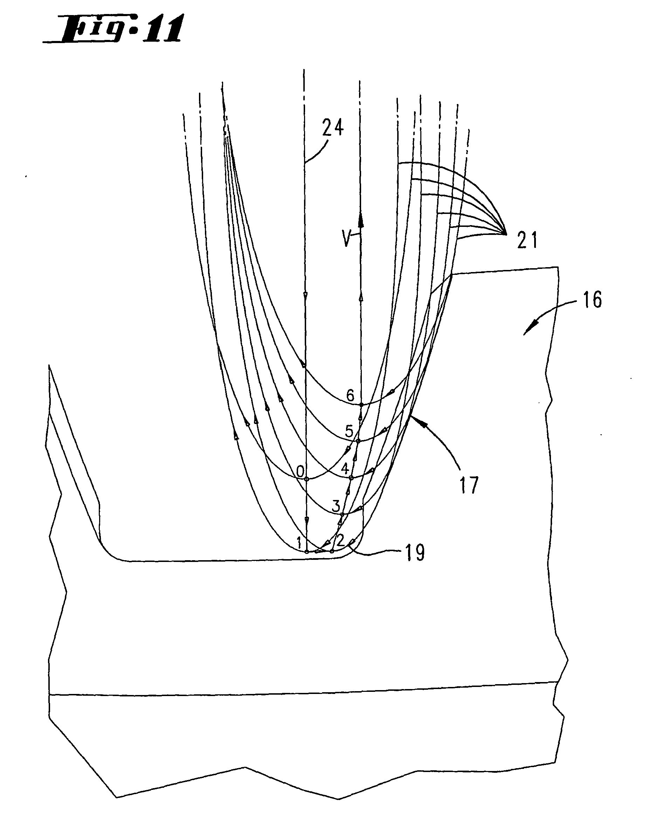

Bei dem in Fig. 11 dargestellten Ausführungsbeispiel, welches bevorzugt ist, erfolgt der Vorschub V entgegen der Schnittrichtung, die vom Zahnkopf zum Zahngrund hin erfolgt. Auch hier erfolgt eine Zustellung bis zum Punkt 0. Durch eine im Wesentlichen reine Veränderung des Achsabstandes wird dann der Zykloidenast 21 in die Position 1 gebracht. Durch eine Änderung der Phasenlage bzw. der Neigung erfolgt dann eine Verschwenkung des Zykloidenastes 21 hin zum Punkt 2. Während dieser Verschwenkung hebt die entlang des Zykloidenastes 21 verlaufende Schneidkante 3 Späne aus der Zahnflanke 17 ab, die derart kurz sind, dass eine Trockenbearbeitung möglich ist. Wenn der Punkt 2 erreicht ist, wird der Zykloidenast 21 über die Punkte 3, 4, 5 hin zum Punkt 6 derart verlagert, dass die Hüllkurve dem zu zerspanenden Profil entspricht

Der erste Schnitt entlang der Zykloide ist im Verhältnis lang. Eine Trockenbearbeitung ist aber dennoch möglich, da die Schnittgeschwindigkeit größer als 50 m/ min. ist, eine Hartmetallwendeplatte verwendet wird und die Zerspangeometrie an der Schneide günstig ist.

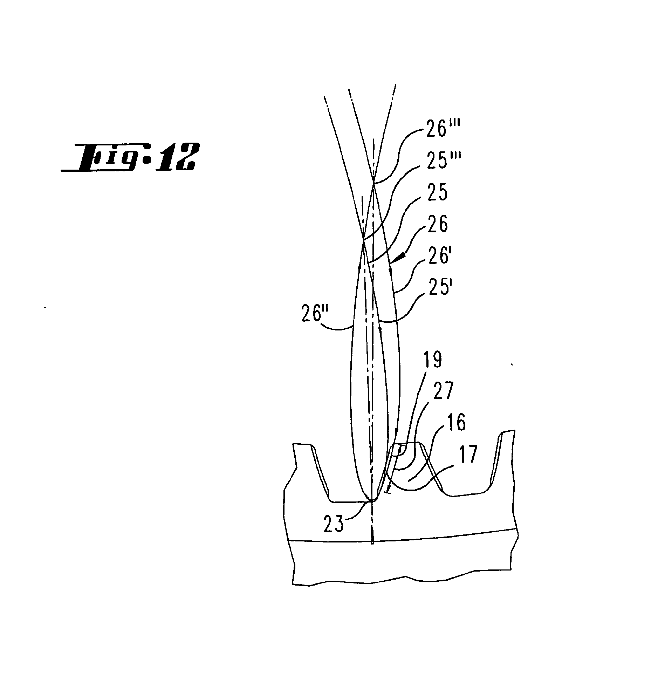

Bei dem in Fig. 12 dargestellten Ausführungsbeispiel ist mit der Bezugsziffer 25 eine originale Zykloidenschleife dargestellt, die dadurch entsteht, dass Werkrad und Werkstück mit gleichbleibender Drehzahl drehen. Auch hier schneiden sich zulaufender Zykloidenast 25' und rücklaufender Zykloidenast in einem Punkt 25"'.

Bei dem hier dargestellten Verfahren wird aber der Achsabstand bzw. die Phasenlage von Werkstück und Werkzeug derart hochdynamisch und schnell geregelt, dass die Schneidkante auf einer asymmetrischen Zykloidenschleife 26 verläuft. Relevant ist dabei der Abschnitt des zulaufenden Zykloidenastes 26' im Bereich der mit der Bezugsziffer 27 bezeichneten Strecke, die der Länge des zu bearbeitenden Profils der Zahnflanke 17 entspricht. Hier verläuft der Zykloidenast 26' entlang der Profilkurve 19.

Der ablaufende Zykloidenast 26" entspricht dabei dem der Originalzykloidenschleife. Jeder zulaufende Zykloidenast 26' ist modifiziert. Dies hat zur Folge, dass der Schnittpunkt 26"' des modifizierten zulaufenden Zykloidenastes 26' versetzt liegt zum Schnittpunkt 25"' des zulaufenden Astes 25' der Originalzykloidenschleife mit dem jeweils ablaufenden Zykloidenast 26".

Mit dem in der Eg. 12 dargestellten Verfahren kann insbesondere bei innenverzahnten Werkstücken ein letzter Schlichtschnitt über die bearbeitete Hinterlegung gezogen werden, um geringfügige Ungenauigkeiten zu beseitigen.

## Patentansprüche

1. Verfahren zum Profilieren von verzahnten Werkstücken, insbesondere zum Erzeugen von Hinterlegungen oder dergleichen an Zahnflanken innen- oder außenverzahriter Werkräder, durch spanende Bearbeitung des drehangetriebenen Werkstückes mittels eines drehangetriebenen Schneidkantenwerkzeuges (1), dessen Schneidkante (3,5) mit der Verzahnung des Werkstückes kämmt, wobei die Schneidkante (3, 5) des um eine zur Werkstückachse parallelen Werkzeugachse in einem im Wesentlichen festen Drehzahlverhältnis zum Werkstück drehenden Schneidkantenwerkzeuges (1) zufolge einer der Drehbewegung überlagerten Kombination von Variation des Achsabstandes und Variation der Phasenlage oder der Neigung der Achslage auf einer der Profilform entsprechenden Kurve (19) verlagert wird, wobei die Schnittrichtung zum Zahngrund hin erfolgt, **dadurch gekennzeichnet, dass** die durch den Achsabstand (AS, AZ), den Flugkreis (F) der Schneidkante (3, 5) und das Übersetzungsverhältnis definierte zykloidische Bewegungsbahn der Schneidkante (3, 5) gegenüber dem Werkstück so gewählt ist, dass der zulaufende Ast (21') einer Zykloidenschleife den rücklaufenden Ast (21") derselben Zykloidenschleife schneidet (21"').

2. Verfahren nach Anspruch 1, **dadurch gekennzeichnet, dass** der Vorschub derart erfolgt, dass die aufeinanderfolgenden Schnitte auf einer der Profilform entsprechenden Hüllkurve (19) liegen.

3. Verfahren nach einem der vorhergehenden Ansprüche, **dadurch gekennzeichnet, dass** der Vorschub (V) der Schnittrichtung entgegengerichtet ist.

4. Verfahren nach einem der vorhergehenden Ansprüche, **dadurch gekennzeichnet, dass** in einer ersten Drehrichtung erst die eine Zahnflanke (17) aller Zähne (16) und nach Umkehr der Drehrichtung die jeweils andere Zahnflanke (18) aller Zähne (16) bearbeitet wird und insbesondere das Übersetzungsverhältnis so gewählt ist, dass sich die Bearbeitung der Zahnflanke (17,18) eines Zahnes (16) erst dann wiederholt, wenn die jeweiligen Zahnflanken (17,18) aller anderen Zähne (16) bearbeitet worden sind.

5. Verfahren nach einem der vorhergehenden Ansprüche, **dadurch gekennzeichnet, dass** die Schneidkante (3, 5) den Umkehrpunkt (23) ihrer Zykloidenbahn (21) nach Austritt aus dem zu zerspanenden Material (20) erreicht.

6. Verfahren nach einem der vorhergehenden Ansprüche, **dadurch gekennzeichnet, dass** der im Verlaufe des Schnittes abnehmende Spanwinkel (y) positiv ist oder nur unmittelbar vor der Beendigung des Schnittes einen kleinen negativen Wert annimmt.

7. Verfahren nach einem der vorhergehenden Ansprüche, **dadurch gekennzeichnet, dass** das spiegelsymmetrische Werkzeug zur Bearbeitung jeder der beiden Zahnflanken eine eigene Wendeschneidplatte (2, 4) aufweist, wobei eine durch die beiden Schneidkanten (3, 5) gehende Verbindungslinie derart versetzt zur Werkzeugachse (AZ) verläuft, dass bei einer Zahnflankenbearbeitung mit der einen. Wendeschneidplatte (2, 4) die Schneidkante (3, 5) der jeweils anderen frei durch die Zahnlücke taucht.

8. Verfahren nach einem der vorhergehenden Ansprüche, **dadurch gekennzeichnet, dass** das Werkzeug zur Bearbeitung einer Zahnflanke (17,18) mehrere Schneidkanten aufweist.

9. Verfahren nach einem der vorhergehenden Ansprüche, **dadurch gekennzeichnet, dass** zumindest ein Schnitt, vorzugsweise ein letzter Schlichtschnitt auf der der Profilform entsprechenden Kurve (19) erfolgt.

10. Verfahren nach einem der vorhergehenden Ansprüche, **dadurch gekennzeichnet, dass** zwei in Achsrichtung voneinander beabstandete Profilierungen gleichzeitig mit zwei voneinander axial beabstandeten Schneidkanten bearbeitet werden.

## Claims

1. Method for profiling toothed workpieces, in particular for producing undercuts or the like on tooth flanks of internally or externally toothed working gears, by machining the rotationally driven workpiece by means of a rotationally driven cutting edge tool (1), the cutting edge (3, 5) of which meshes with the teeth of the workpiece, the cutting edge (3, 5) of the cutting edge tool (1), which rotates about a tool axis parallel to the workpiece axis in a substantially fixed rotational speed ratio relative to the workpiece, being displaced on a curve (19) corresponding to the profile shape as a result of a combination, superimposed on the rotational movement, of variation of the distance between axes and variation of the phase position or the inclination of the axis position, the cutting direction extending towards the tooth base, **characterised in that** the cycloidal trajectory, defined by the distance between axes (AS, AZ), the orbit (F) of the cutting edge (3, 5) and the gear ratio, of the cutting edge (3, 5) relative to the workpiece is selected in such a way that the feed branch (21') of a cycloidal loop intersects (21''') the return branch (21 ") of the same cycloidal loop.

2. Method according to claim 1, **characterised in that** the feed movement occurs in such a way that the successive cuts are located on an envelope (19) corresponding to the profile shape.

3. Method according to any one of the preceding claims, **characterised in that** the feed movement (V) is in the opposite direction from the cutting direction.

4. Method according to any one of the preceding claims, **characterised in that**, in a first rotational direction, first one tooth flank (17) of all the teeth (16) and, after the rotational direction has been reversed, the respective other tooth flank (18) of all the teeth (16) is machined, and in particular the gear ratio is selected in such a way that the machining of the tooth flank (17, 18) of a first tooth (16) is only repeated once the respective tooth flanks (17, 18) of all other teeth (16) have been machined.

5. Method according to any one of the preceding claims, **characterised in that** the cutting edge (3, 5) reaches the reversal point (23) of its cycloidal path (21) after exiting the material (20) to be machined.

6. Method according to any one of the preceding claims, **characterised in that** the rake angle (γ), which decreases over the course of the cut, is positive or only assumes a small negative value directly before the end of the cut.

7. Method according to any one of the preceding claims, **characterised in that** the mirror-symmetrical tool comprises a particular indexable insert (2, 4) for machining each of the two tooth flanks, a connecting line which intersects the two cutting edges (3, 5) extending offset from the tool axis (AZ) in such a way that, when a tooth flank is being machined using one indexable insert (2, 4), the cutting edge (3, 5) of the respective other indexable insert moves freely through the tooth gap.

8. Method according to any one of the preceding claims, **characterised in that** the tool comprises a plurality of cutting edges for machining a tooth flank (17, 18).

9. Method according to any one of the preceding claims, **characterised in that** at least one cut, preferably a final finishing cut, occurs on the curve (19) corresponding to the profile shape.

10. Method according to any one of the preceding claims, **characterised in that** two profilings with spacing from one another in the axial direction are machined simultaneously using two cutting edges with axial spacing from one another.

## Revendications

1. Procédé pour profiler des pièces dentées, notamment pour former des contre-dépouilles ou des structures similaires sur des flancs de dents de roues à denture intérieure ou extérieure, par usinage à enlèvement de copeaux de la pièce entraînée en rotation au moyen d'un outil à arête de coupe (1), entraîné en rotation, dont l'arête de coupe (3, 5) s'engrène avec la denture de la pièce, dans lequel l'arête de coupe (3, 5) de l'outil à arête de coupe (1) tournant autour d'un axe d'outil parallèle à l'axe de pièce dans un rapport de vitesse de rotation sensiblement fixe par rapport à la pièce est déplacée sur une courbe (19) correspondant à la forme du profil à la suite d'une combinaison, superposée au mouvement de rotation, de variation de l'écartement des axes et de variation de la position de phase ou de l'inclinaison de la position d'axe, le sens de coupe se dirigeant vers la base de la dent, **caractérisé en ce que** la trajectoire de déplacement en forme de cycloïde de l'arête de coupe (3, 5) par rapport à la pièce, trajectoire définie par l'écartement (AS, AZ) des axes, par l'orbite (F) de l'arête de coupe (3, 5) et par le rapport de démultiplication, est sélectionnée de sorte que la branche d'avancée (21') d'une boucle de cycloïde coupe (21"') la branche de rebroussement (21") de la même boucle de cycloïde.

2. Procédé selon la revendication 1, **caractérisé en ce que** l'avance est réalisée d'une telle façon que les coupes successives se situent sur une courbe enveloppe (19) correspondant à la forme du profil.

3. Procédé selon l'une des revendications précédentes, **caractérisée en ce que** l'avance (V) est orientée dans le sens opposé à la direction de coupe.

4. Procédé selon l'une des revendications précédentes, **caractérisé en ce que** dans un premier sens de rotation, d'abord l'un des flancs de dent (17) de toutes les dents (16) et, après inversion de sens de rotation, l'autre flanc (18) respectif de toutes les dents (16) est usiné, et en particulier le rapport de transmission est choisi de manière que l'usinage de la surface de dent (17, 18) d'une dent (16) se répète uniquement quand les flancs de dent respectifs (17, 18) de toutes les autres dents (16) ont été usinées.

5. Procédé selon l'une quelconque des revendications précédentes, **caractérisé en ce que** le bord de coupe (3, 5) atteint le point d'inversion (23) de sa trajectoire de déplacement en forme de cycloïde (21) après avoir quitté le matériau à usiner par enlèvement de copeaux (20).

6. Procédé selon l'une quelconque des revendications précédentes, **caractérisé en ce que** l'angle de coupe (γ), qui diminue au cours de la coupe, est positif ou adopte une petite valeur négative uniquement directement avant la fin de la coupe.

7. Procédé selon l'une des revendications précédentes, **caractérisé en ce que** l'outil, qui présente une symétrie miroir, pour l'usinage de chacun des deux flancs d'une dent présente sa propre plaquette réversible (2, 4), dans lequel une ligne de liaison passant par les deux arêtes de coupe (3, 5) est décalée par rapport à l'axe (AZ) de l'outil de sorte que, lors de l'usinage d'un flanc de dent au moyen de l'une des plaquettes de coupe réversibles (2, 4) les arêtes de coupe (3, 5) de l'autre respectivement pénètrent librement à travers l'intervalle de dent.

8. Procédé selon l'une des revendications précédentes, **caractérisé en ce que** l'outil pour l'usinage de l'un des flancs de dent (17,18) présente une pluralité d'arêtes de coupe.

9. Procédé selon l'une des revendications précédentes, **caractérisé en ce qu'**au moins l'une des coupes, de préférence une dernière coupe de finissage est pratiquée sur la courbe (19) correspondant à la forme du profil.

10. Procédé selon l'une des revendications précédentes, **caractérisé en ce qu'**on usine simultanément deux profils à distance l'un de l'autre dans le sens axial au moyen de deux arêtes de coupe espacées axialement l'une de l'autre.
